Europäisches Patentamt

**European Patent Office**

**Office européen des brevets**

(11) Publication number: **0 392 674**
**A2**

## EUROPEAN PATENT APPLICATION

(21) Application number: **90302888.4**

(22) Date of filing: **16.03.90**

(51) Int. Cl.⁵: **B29C 51/10, //B29K79:00**

(30) Priority: **13.04.89 GB 8908340**

(43) Date of publication of application:
**17.10.90 Bulletin 90/42**

(84) Designated Contracting States:
**DE FR GB**

(71) Applicant: **BRITISH AEROSPACE PUBLIC LIMITED COMPANY**
**11 Strand**
**London WC2N 5JT(GB)**

(72) Inventor: **Voaden, Philip Anthony, British Aerospace**
**Public Ltd. Co., BAe (Space Systems) Ltd.**
**P.O. Box 5, Filton, Bristol BS1 7QW(GB)**
Inventor: **Morse, Eric Donald, British Aerospace**
**Public Ltd. Co., BAe (Space Systems) Ltd.**
**P.O. Box 5, Filton, Bristol BS1 7QW(GB)**

(74) Representative: **Rooney, Paul Blaise et al**
**British Aerospace plc Corporate IPR Department, Headquarters P.O. Box 87 Building Q191 Royal Aerospace Establishment**
**Farnborough Hants GU14 6YU(GB)**

(54) **A process for the production of a shaped sheet of polyimide.**

(57) A process for the production of a shaped sheet of polyimide, includes the steps of placing a sheet of polyimide (1) to be shaped on a shaped surface of a die (2), sealing the sheet edges (7) to the die (2), applying a vacuum between the die surface and the sheet (1) to draw the sheet (1) into contact with the shaped die surface to impart the required shape to the sheet, placing the die (2) and sheet (1) in a gas containing autoclave whilst maintaining said vacuum, sealing the autoclave and raising the temperature therein to a temperature selected in the range of from about 150˚ to 250˚C depending upon the sheet thickness, raising the pressure in the autoclave to a pressure selected in the range of from 5 to 15 bar depending upon the sheet thickness and selected temperature, maintaining the selected temperature and pressure in the autoclave for a time in the range of from 3 to 15 minutes, reducing the selected temperature in the autoclave to a temperature in the range of from 25˚ to 125˚C whilst maintanung the selected pressure, reducing the pressure in the autoclave to ambient pressure, removing the shaped sheet (5) and die (2) from the autoclave and removing the shaped sheet (5) from the die (2).

# A PROCESS FOR THE PRODUCTION OF A SHAPED SHEET OF POLYIMIDE

This invention relates to a process for the production of a shaped sheet of polyimide.

Polyimide is a very stable organic polymer. It has many qualities which render it ideally suitable as a material compatible with the environment extremes encountered by equipment designed for use in aerospace. It is most widely available in the form of a sheet produced in rolls of various thicknesses and widths. It is in this form that the material finds maximum usage for aerospace applications.

Polyimide retains its physical properties and dimensional stability over a wide range of temperatures. Relative to other organic films it has a very high cut-through resistance and creep strength at elevated temperatures. While it is these factors which make the material attractive for aerospace use it is these very properties which make it difficult permanently to modify the shape of the original sheet for a specific application.

There is thus a need for a process for the production of a shaped sheet of polyimide which achieves substantially permanent deformation.

According to the present invention there is provided a process for the production of a shaped sheet of polyimide, characterised by including the steps of placing a sheet of polyimide to be shaped on a shaped surface of a die, sealing the sheet edges to the die, applying a vacuum between the die surface and the sheet to draw the sheet into contact with the shaped die surface to impart the required shape to the sheet, placing the die and sheet in a gas containing autoclave whilst maintaining said vacuum, sealing the autoclave and raising the temperature therein to a temperature selected in the range of from about 150° to 250°C depending upon the sheet thickness, raising the pressure in the autoclave to a pressure selected in the range of from 5 to 15 bar depending upon the sheet thickness and selected temperature, maintaining the selected temperature and pressure in the autoclave for a time in the range of from 3 to 15 minutes, reducing the selected temperature in the autoclave to a temperature in the range of from 25° to 125°C whilst maintaining the selected pressure, reducing the pressure in the autoclave to ambient pressure, removing the shaped sheet and die from the autoclave and removing the shaped sheet from the die.

Preferably the gas employed in the autoclave is air.

Conveniently the sheet thickness is substantially 50μm, the raised temperature is substantially 195°C, the raised pressure is substantially 11 bar, the time for maintenance of the selected raised temperature and pressure is substantially 7 minutes and the reduced temperature is substantially 50°C.

According to another aspect of the invention there is provided a shaped sheet of polyimide characterised by being produced according to the process of the invention, in the form of a cushion sheet having an array of spaced apart raised projections or pimples thereon, for separating and supporting arrays of solar cells when in a folded or rolled up stowage position.

For a better understanding of the present invention, and to show show the same may be carried into effect, reference will now be made, by way of example, to the accompanying drawings, in which:-

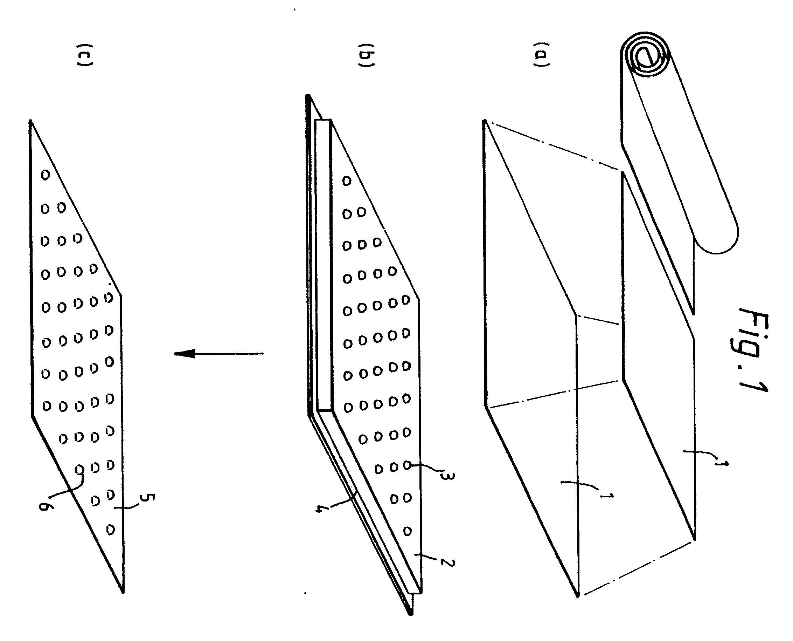

Figures 1(a) to (c) show diagrammatically successive stages in a process for the production of a shaped sheet of polyimide according to the invention, and

Figures 1(a) to 1(f) show diagrammatically and in cross-section successive stages in the process of Figures 1(a) to 1(c).

Polyimide film has a number of uses in the design and construction of space equipment. Examples are thermal tape, multi layer insulation and Protective Interleafing. In the latter use a sheet or strip or a plurality of sheets or strips in either flat or shaped format are interspaced between fragile items in order to prevent contact between those items when subject to dynamic loading environments.

A specific example of use of shaped polyimide sheet for protective interleafing is in the construction of solar cell arrays. Arrays which employ a thin flexible substrate on which the solar cells are mounted are mostly either a multiple fold out flexible panel design or a continuous roll out concept. In either case due to the way in which the arrays are stowed during the launch phase of a spacecraft mission it is possible that contact may occur between the fragile solar cells. Unless 'the cells are separated and supported by a suitably designed cushioning material damage to the cells may be incurred as a result of their response to the dynamic loading input generated during the launch phase. Shaped polyimide sheet is most suitable for use as protective interleafing for separation of such cells.

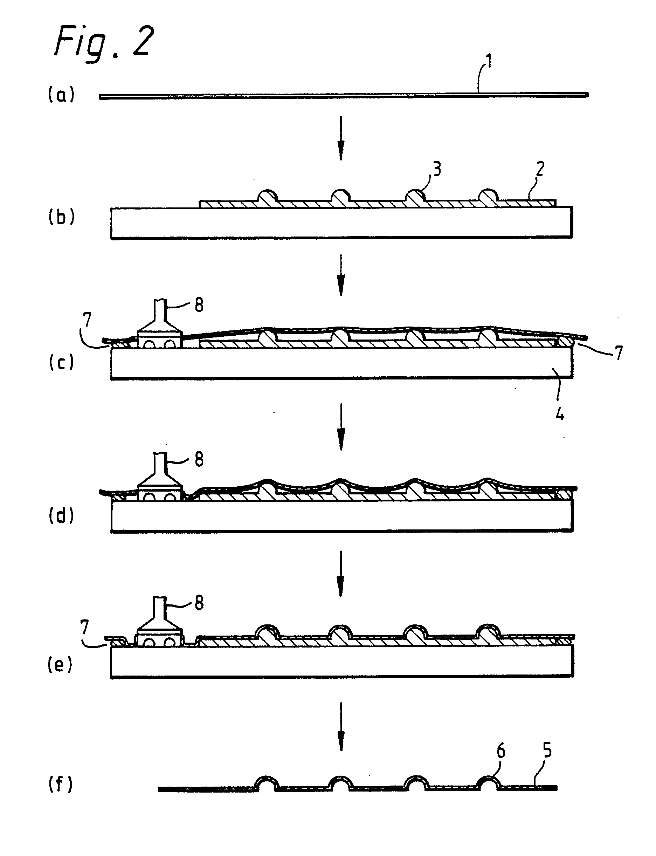

As shown in Figures 1(a) to 1(c) and 2(a) to 2(f) the process of the invention for the production of a shaped sheet of polyimide requires firstly a sheet of polyimide 1 to be cut from a roll to a size and shape compatible with the design and function of an embossing die 2 as shown in Figure 1(a), with the die 2 mounted on a support 4 the planar cut sheet of polyimide is laid on to the surface of the die 2 as shown in Figure 2(c). The die 2 has any convenient configuration such as an array of spaced apart projections or pimples 3 as shown in Figures 1(b) and 2(b). The sheet is then sealed at 7 to the die 2 in any convenient manner in order that a vacuum may be introduced and maintained between the sheet 1 and the surface of the die 2.

A vacuum pump is attached by any suitable means at 8 to the sheet/die assembly and the air extracted to the maximum extent possible from between the sheet 1 and die 2. The sheet will now make contact with the surface of the die 2 under the influence of the ambient air pressure (Fig. 2d). The sheet can be seen partly to follow the embossing pattern which forms the surface of the die 2.

The complete film and die assembly are now placed inside an autoclave. (not shown) which is then closed and sealed. The temperature in the autoclave, which contains gas such as air, is raised at a predetermined rate to a desired elevated temperature in the range of from 150° to 250° C and typically 195° C for a polyimide sheet of thickness 50$\mu$m. This temperature is monitored at the die sheet assembly and held constant.

The internal air pressure of the autoclave is then raised at a pre-determined rate to a desired elevated pressure in the range of from 5 to 15 bar and preferably 11 bar. The set temperature and pressure are maintained constant for a specified duration in the range of from 3 to 15 minutes and preferably for 7 minutes.

The polyimide sheet 1 has now taken up the shape of the pattern on the die 2 as shown in Figure 2(e).

The autoclave temperature is then allowed to fail at a predetermined rate to a desired lower maximum value in the range of from 25° to 125° C and preferably 50° C. During this period the pressure is maintained at the desired raised pressure.

After the autoclave and sheet/die assembly have cooled to a temperature below the lower maximum value the internal pressure of the autoclave is allowed to fall at a predetermined and controlled rate to that of the external ambient conditions.

The autoclave is then opened and the vacuum released from the sheet/die assembly. The sheet/die assembly is then removed from the autoclave.

The shaped sheet 5 is now removed from the die 2 in any suitable way compatible with the sealing technique used. (Fig. 2f). This leaves an array of projections or pimple like projections 6 on the shaped sheet 5 as shown in Figures 1(c) and 2-(f). The process can now be repeated using another sheet of polyimide.

The detailed design of the shaped or embossed sheet will vary from application to application. The desired protection performance can be achieved by a suitable combination of film thickness, embossing pattern, embossing shape density and depth. Any one or more of these parameters can be varied in relation to the others in order to produce an acceptable resilience and damping quality pertinent to the needs of the specific application.

The deformations 6 produced on the sheet 1 may be single or multiple and may combine together to form a regular or irregular formation of deformations in a recognisable pattern. This pattern may be repeatable or non-repeatable throughout the complete polyimide sheet. The deformations 6 may vary in shape, density and depth.

In the process of the invention the inherent creep characteristics of the polyimide material are enhanced by controlled application of high loading at elevated temperatures for a specified duration.

For the purposes of illustrating the process and assisting in the description a particular shaping or embossing pattern has been selected. This pattern provides regular part spherical deformations 6 in the finished sheet 5. (Fig. 1b, Fig. 1c, Fig. 2b and Fig. 2f). The invention is not limited to the aforementioned pattern but is applicable to any embossed pattern which is capable of being produced by the said process. Preferably the die 2 is made of light metal alloy.

The die 2 may be produced in any convenient manner depending upon the embossing pattern characteristics required. Additionally the die 2 must allow a sheet 1 of polyimide to be laid upon the embossed or patterned surface 2 of said die (Fig. 2c) and the application of a vacuum pump at a suitable location 8 on the die to draw the sheet into close contact with the embossed pattern surface (Fig. 2d). In order to achieve this the edges of the sheet 1 are sealed at 7 in any suitable manner in contact with the die 2 or its immediate supporting structure 4 in order to prevent the influx of ambient air. The die 2 may be perforated to allow air to be sucked therethrough from between the overlying sheet 1 and the die 2 or the air may be sucked from therebetween from the edges of an unperforated die.

An autoclave chamber capable of being closed and sealed in such a way as to provide an isolated and controllable environment is provided. This autoclave is filled with gas such as filtered air from the normal external environment. The air within the autoclave can be heated and raised in pressure above ambient conditions.

**Claims**

1. A process for the production of a shaped sheet of polyimide, characterised by including the steps of placing a sheet of polyimide (1) to be shaped on a shaped surface of a die (2), sealing the sheet edges (7) to the die (2), applying a vacuum between the die surface and the sheet (1) to draw the sheet (1) into contact with the shaped die surface to impart the required shape to the sheet, placing the die (2) and sheet (1) in a gas containing autoclave whilst maintaining said vacuum, sealing the autoclave and raising the temperature therein to a temperature selected in the range of from about 150° to 250° C depending upon the sheet thickness, raising the pressure in the autoclave to a pressure selected in the range of from 5 to 15 bar depending upon the sheet thickness and selected temperature, maintaining the selected temperature and pressure in the autoclave for a time in the range of from 3 to 15 minutes, reducing the selected temperature in the autoclave to a temperature in the range of from 25° to 125° C whilst maintaining the selected pressure, reducing the pressure in the autoclave to ambient pressure, removing the shaped sheet (5) and die (2) from the autoclave and removing the shaped sheet (5) from the die (2).

2. A process according to claim 1, in which the gas employed in the autoclave is air.

3. A process according to claim 1 or claim 2, in which the sheet thickness is substantially 50$\mu$m, the raised temperature is substantially 195° C, the raised pressure is substantially 11 bar, the time for maintenance of the selected raised temperature and pressure is substantially 7 minutes and the reduced temperature is substantially 50° C.

4. A shaped sheet of polyimide characterised by being produced according to the method of any one of claims 1 to 3.

5. A shaped sheet of polyimide according to claim 4, in the form of a cushion sheet (5) having an array of spaced apart raised projections or pimples (3,6) thereon, for separating and supporting arrays of solar cells when in a folded or rolled up stowage position.

# Fig.1

(a)

(b)

(c)

# Fig. 2